# EUROPÄISCHE PATENTSCHRIFT

(11) **EP 0 576 981 B1**
(45) Veröffentlichungstag und Bekanntmachung des Hinweises auf die Patenterteilung: **14.08.1996**
(21) Anmeldenummer: 93109995.6
(22) Anmeldetag: 23.06.1993
(51) Int. Cl.: E03F 5/10

(54) **Spüleinrichtung zum selbsttätigen Spülen eines leergelaufenen Flüssigkeitsspeicherraumes, insbesondere eines Regenbeckens oder eines Kanalstauraumes**
Flushing device for flushing an emptied liquid storage space automatically, in particular a rain water or a sewage storage tank
Dispositif de rinçage pour rincer automatiquement un espace de retenue de liquide vidé, en particulier un bassin d'eau de pluie ou d'eau d'égout

(30) Priorität: 01.07.1992 DE 4221569
(43) Veröffentlichungstag der Anmeldung: 05.01.1994
(73) Patentinhaber: ALLOY-TECH AKTIENGESELLSCHAFT, FL-9490 Vaduz (LI)
(72) Erfinder: Richter, Michael, D-6204 Taunusstein (DE)
(74) Vertreter: Patentanwälte Möll und Bitterich

(56) Entgegenhaltungen:
- WO-A-90/15201
- DE-A- 2 109 443
- DE-A- 3 915 076
- GB-A- 2 024 372

## Beschreibung

Die Erfindung betrifft eine Spüleinrichtung zum selbsttätigen Spülen eines leergelaufenen Flüssigkeitsspeicherraumes, insbesondere eines Regenbeckens oder eines Kanalstauraumes gemäß dem Oberbegriff des Patentanspruchs 1.

Bei einer Spüleinrichtung der eingangs genannten Art ist in der die Spülkammer luftdicht abschließenden Decke ein Rohrstutzen angeordnet (DE 39 15 076 C2). An dem Rohrstutzen befinden sich eine Austrittsöffnung für die beim Füllen der Spülkammer mit Spülflüssigkeit zu verdrängende Luft und eine Lufteintrittsöffnung. Die Austrittsoffnung ist mit einem Rückschlagventil versehen; die Lufteintrittsöffnung weist einen Ventilsitz für einen Ventilkörper zum Verschluß der Lufteintrittsöffnung bzw. zur Freigabe des Lufteintritts in die Spülkammer auf, der mit einem Schwimmer bewegungsschlüssig verbunden ist. Hierdurch und durch die besondere Gestaltung der Auslaufzone der Spülkammer wird erreicht, daß die Spülflüssigkeit in der Spülkammer nicht unmittelbar durch mechanische Verschlußmittel, wie die Spülöffnungen verschließende Klappen, sondern mittelbar durch atmosphärischen Luftdruck zurückgehalten wird, der beim Absinken des Flüssigkeitsniveaus im Speicherraum von selbst zur Wirkung kommt. Der Spülvorgang wird durch Freigabe des Lufteintritts in die Spülkammer bewirkt.

Wenn es bei dieser bekannten Spüleinrichtung auch moglich ist, unterhalb des Flüssigkeitsniveaus der Speicherflüssigkeit auf bewegte Teile, die der Gefahr der Verschmutzung unterliegen, weitgehend verzichten zu können, so liegt doch eine gewisse Unsicherheit noch in der Betätigung des Ventilkörpers für die Lufteintrittsöffnung durch einen Schwimmer, was die Füllung der Spülkammer von der gleichzeitigen Füllung des Regenbeckens abhängig macht.

Vor diesem Hintergrund liegt der Erfindung die Aufgabe zugrunde, eine Möglichkeit für eine einfachere und sicherere Betätigung zum Verschließen und plötzlichen Öffnen der Lufteintrittsöffnung zu schaffen und auch die Füllung der Spülkammer von derjenigen des Regenbeckens unabhängig zu machen.

Nach der Erfindung wird diese Aufgabe durch die Merkmale gemäß dem kennzeichnenden Teil des Patentanspruchs 1 gelöst.

Vorteilhafte Weiterbildungen ergeben sich aus den Unteransprüchen.

Da der aus einer Membran bestehende Ventilkörper Teil einer Druckdose ist, die aktiv mit Druckluft beaufschlagt werden kann, um die Membran als VerschLußelement zu aktivieren, kann er sich einerseits schnell und dicht an den Ventilsitz anlegen und so die Lufteintrittsöffnung zuverlässig verschließen, kann sich aber bei Freigabe eines Druckausgleichs rasch vom Ventilsitz lösen, so daß die Lufteintrittsöffnung sehr schnell vollständig freigegeben wird. Dadurch läuft die in der Spülkammer zurückgehaltene Spülflüssigkeit plötzlich aus der Spülkammer aus, so daß ein starker Spülstoß entsteht.

Da die Membran als Teil einer Druckdose ein aktiv beaufschlagbares Ventil darstellt, besteht die weitere Möglichkeit, an die Spülkammer ein Vakuumgebläse anzuschließen. Durch ein solches Vakuumgebläse kann einerseits die Füllung der Spülkammer bei gleichzeitiger Füllung des Speicherraumes selbst unterstützt und beschleunigt werden; vor allem besteht aber mittels eines Vakuumgebläses die Möglichkeit, in die Spülkammer auch aus einem nur teilweise gefüllten Speicherraum oder aus einer dem Speicherraum vorgeschalteten Zulaufkammer aufgestautes Abwasser, ja sogar Fremdwasser "einzusaugen", sofern nur der Wasserspiegel in der Auslaufzone der Spülkammer oberhalb der Unterkante der Austrittsöffnung liegt, also die Spülöffnung sicher verschließt. Damit sind nach der Erfindung voll wirksame Spülvorgänge auch dann möglich, wenn der Speicherraum nicht oder nur teilweise gefüllt ist.

Die Erfindung wird nachstehend anhand der Zeichnung näher erläutet. Es zeigt
- Fig. 1: einen Längsschnitt durch ein Regenbecken gemäß der Erfindung mit einer Spülkammer,
- Fig. 2: einen Querschnitt durch das Regenbecken nach Fig. 1,
- Fig. 3: als Ausschnitt aus Fig. 1 einen Querschnitt durch die Spülkammer in größerem Maßstab und die
- Fig. 4 und 5: Detaildarstellungen der Lufteintrittsöffnung in die Spülkammer in unterschiedlichen Betriebszuständen.

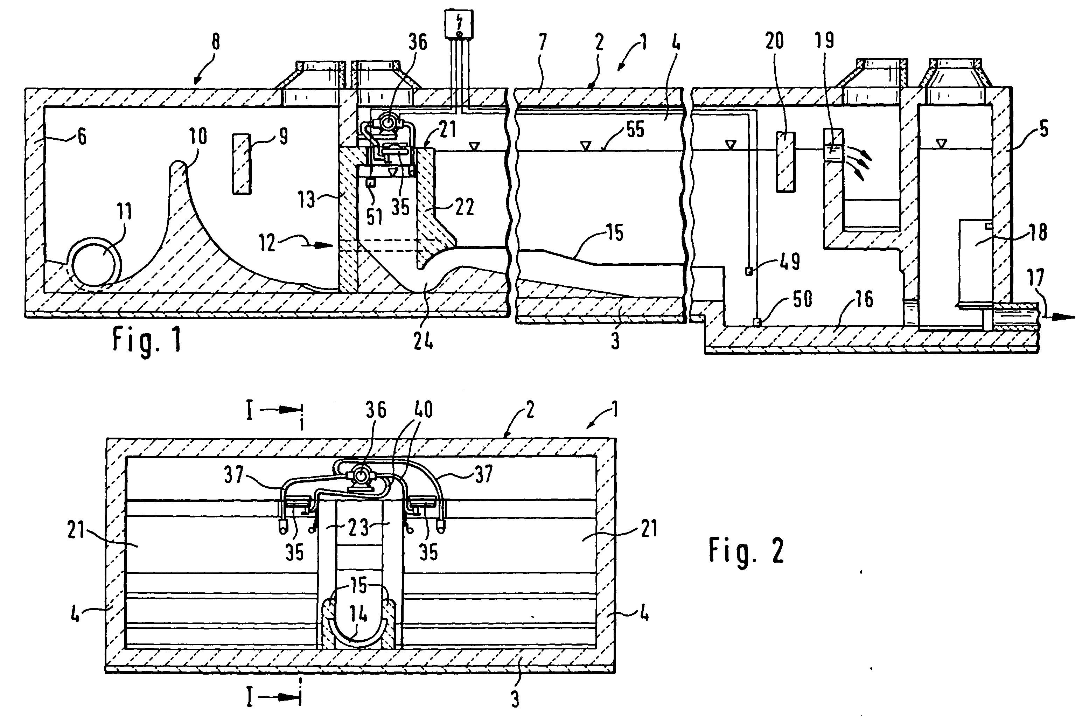

In den Fig. 1 und 2 ist ein Regenrückhaltebecken 1 mit einem Speicherraum 2 in Längs- und Querschnitt dargestellt. Das Regenrückhaltebecken 1 besteht aus einem im wesentlichen rechteckförmigen Behälter aus Stahlbeton mit einer Beckensohle 3, Längswänden 4, Stirnwänden 5 und 6 sowie einer Decke 7. Zuflußseitig ist dem Speicherraum 2 eine Einlaufkammer 8 mit dem - nicht erkennbaren - Zulauf vorgeschaltet, in der sich eine durch eine Tauchwand 9 gesicherte überlaufschwelle 10 für einen Regenüberlauf 11 befindet.

Der Zulauf 12 zum Speicherraum 2 befindet sich in einer das Regenbecken 1 in voller Höhe unterteilenden Zwischenwand 13. Der Zulauf 12 führt über eine in der Längsmittelachse des Speicherraumes 2 mit Gefälle verlaufende Rinne 14 (Fig. 2) für den Trockenwetterabfluß mit seitlichen Leitwänden 15 in einen Spülsumpf 16 und von dort zum Ablauf 17. Dem Ablauf 17 ist in üblicher Weise ein Abflußmengenregler 18 zugeordnet. Um eine Überflutung zu vermeiden, weist der Speicherraum 2 weiterhin einen Überlauf 19 mit einer diesem vorgelagerten Tauchwand 20 auf.

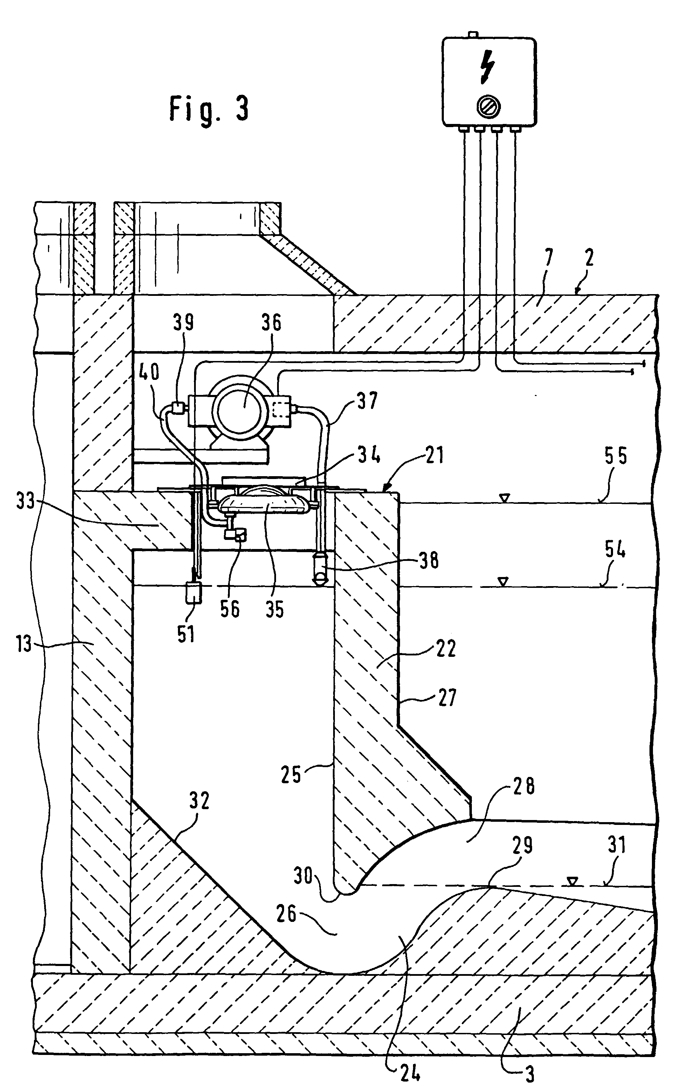

Am Sohlhochpunkt des Speicherraumes 2 befinden sich beidseits der Rinne 14 jeweils eine Spülkammer 21, die in Fig. 3 in einem Ausschnitt aus Fig. 1 in größerem Maßstab dargestellt ist. Jede Spülkammer 21 wird rückseitig begrenzt von der Zwischenwand 13, einer vorderen Kammerwand 22, einer inneren Seitenwand 23 sowie den Außenwänden 4 des Speicherraumes 1. Die Spülkammern 21 sind so Teil der gesamten Stahlbetonkonstruktion.

Wie vor allem Fig. 3 zeigt, befindet sich im unteren Bereich jeder Spülkammer 21 ein syphonartiger Spülkanal 24, der in der die innere Oberfläche 25 der Kammerwand 22 fortsetzenden Ebene eine Eintrittsöffnung 26 für die Spülflüssigkeit aufweist, der in der die äußere Oberfläche 27 der Kammerwand 22 fortsetzenden Ebene eine entsprechende Austrittsöffnung 28 zugeordnet ist. Der Spülkanal 24 ist so geführt, daß die Unterkante 29 der Austrittsöffnung 28 oberhalb der Oberkante 30 der Eintrittsöffnung 26 liegt. Dadurch wird gewährleistet, daß bei gefüllter Spülkammer 21 und leerem Speicherraum 2 durch den atmosphärischen Luftdruck auf den gestrichelt angedeuteten Wasserspiegel 31 im Spülkanal 24 dieser verschlossen und die Spülflüssigkeit in der Spülkammer 21 zurückgehalten wird. Beim Auslaufen der Spülflüssigkeit wird die Bildung eines Spülschwalles durch die zum Spülkanal 24 schräg abfallende Sohle 32 der Spülkammer 21 unterstützt.

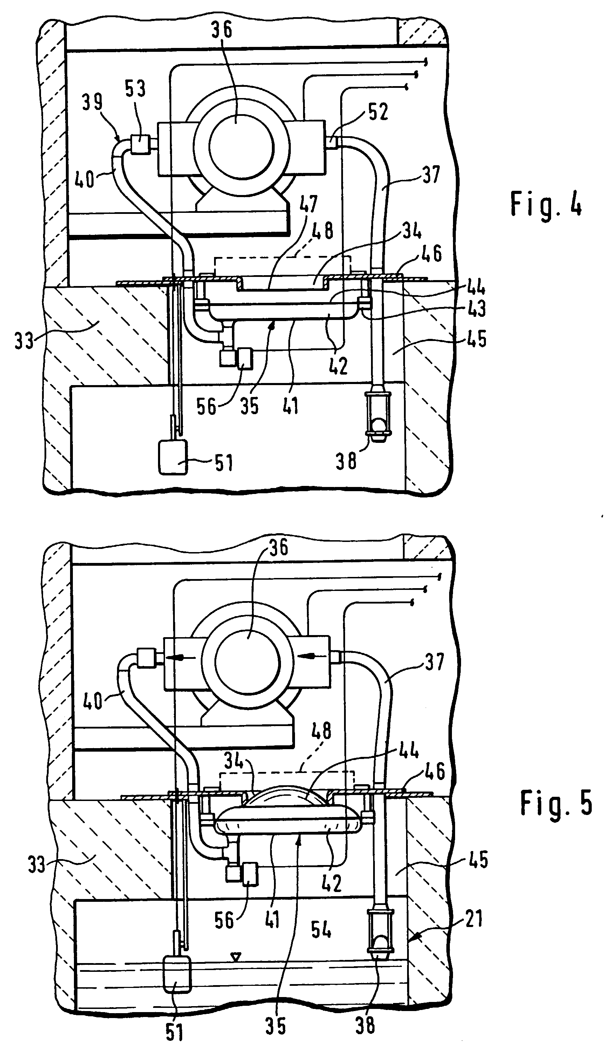

In der Decke 33 der Spülkammer 21 befindet sich eine Lufteintrittsöffnung 34 mit einem Belüftungsventil 35. Oberhalb der Spülkammer 21 ist ein Vakuumgebläse 36 angeordnet, das beiden Spülkammern 21 zugeordnet ist (Fig. 2). Das Vakuumgebläse 36 ist saugseitig jeweils mit einer Saugleitung 37 an die Spülkammern 21 angeschlossen; am Ende der Saugleitung 37 befindet sich jeweils ein Schwimmerventil 38. An der Druckseite des Vakuumgebläses 36 ist eine Verzweigung 39 vorgesehen, die mit einem - nicht gezeigten - Zweig die aus der Spülkammer 21 über die Saugleitung 37 abgesaugte Luft nach außen entläßt und mit einem Zweig 40 als Druckleitung an das Belüftungsventil 35 angeschlossen ist. Die Funktion des Belüftungsventils 35 und des Vakuumgebläses 36 können anhand der Fig. 4 und 5, die Detaildarstellungen dieser Aggregate in größerem Maßstab und in zwei unterschiedlichen Arbeitsphasen zeigen, näher erläutert werden.

Fig. 4 zeigt den Betriebszustand des Belüftungsventils 35 bei leerer Spülkammer 21 z.B. bei Trockenwetterabfluß. Das Belüftungsventil 35 besteht im dargestellten Ausführungsbeispiel aus einer Druckdose 41 aus einem schalenförmigen, einseitig offenen unteren Gehäuse 42 mit seitlichem Flansch 43; es ist oben durch eine Membran 44 aus elastisch verformbarem Material abgedeckt, die im Bereich des Flansches 43 mit dem Gehäuse 42 verschraubt ist. Die Druckdose 41 ist in eine Durchbrechung 45 in der Decke 33 eingesetzt, die im übrigen durch eine Abdeckung 46 aus Stahl verschlossen ist. Die Abdeckung 46 bildet im zentralen Bereich die Lufteintrittsöffnung 34 mit einem Ventilsitz 47. Die Lufteintrittsöffnung 34 ist nach oben hin durch eine gitterförmige Abdeckung 48 geschützt.

Zur weiteren Ausstattung der erfindungsgemäßen Spüleinrichtung gehören zwei Sensoren 49 und 50 im Bereich des Spülsumpfes 16 sowie ein weiterer Sensor 51 in der Spülkammer 21, die der Kontrolle des jeweiligen Wasserstandes dienen (Fig. 1). Diese Sensoren sind im einfachsten Fall Schwimmerschalter.

Die Funktion der erfindungsgemäßen Spüleinrichtung kann wie folgt erläutert werden.

Wenn sich der Speicherraum 2, wie in Fig. 1 dargestellt, bei einem Regenereignis mit Wasser füllt, spricht bei Erreichen eines bestimmten Wasserstandes der Sensor 49 an und schaltet das Vakuumgebläse 36 ein. Der Sensor 49 befindet sich in einer Höhe über der Beckensohle 3, die etwas größer ist als die Höhe des Wasserspiegels 31 im Spülkanal 24. Dadurch wird sichergestellt, daß das im Speicherraum 2 befindliche Wasservolumen ausreicht, um die Spülkammern 21 mindestens einmal füllen zu können.

Mittels des Vakuumgebläses 36 wird über die Saugleitungen 37 Luft aus den Spülkammern 21 abgesaugt; eine Rückschlagklappe 52 verhindert einen vorzeitigen Druckausgleich. Mit der abgesaugten Luft wird über die Druckleitung 40 zunächst die Druckdose 41 beaufschlagt, so daß die Membran 44 die in Fig. 5 dargestellte Form annimmt und im Bereich des Ventilsitzes 47 die Lufteintrittsöffnung 34 verschließt. In der Druckleitung 40 befindet sich ebenfalls eine Rückschlagklappe 53. In Fortsetzung des Absaugvorganges wird die abgesaugte Luft dann über die Verzweigung 39 nach außen abgeführt.

Da der Spülkanal 24 in der oben beschriebenen Weise verschlossen ist, steigt mit zunehmendem Unterdruck in der Spülkammer 21 der Wasserspiegel in dieser an, bis er den Sensor 51 erreicht, der das Vakuumgebläse 36 ausschaltet. Der so erreichte maximale Wasserstand ist in Fig. 3 bei 54 angedeutet. Durch den Sensor 51 ist auch die Möglichkeit gegeben, daß bei fallendem Wasserspiegel in der Spülkammer 21, etwa durch Leckverluste, das Vakuumgebläse 36 wieder eingeschaltet werden kann, um diese Leckverluste auszugleichen und für Spülvorgänge immer eine voll gefüllte Spülkammer zur Verfügung zu haben.

Der Wasserspiegel im Speicherraum 2 kann maximal bis zur Höhe 55 ansteigen, bevor der Überlauf 19 anspricht.

Beim langsamen Entleeren des Speicherraumes 2 ist das Vakuumgebläse 36 ausgeschaltet. Die völlige Entleerung des Speicherraumes 2 wird von dem am Tiefpunkt des Spülsumpfes 16 angeordneten Sensor 50 registriert, der dann den Spülvorgang auslöst. Hierzu wird durch den Sensor 50 ein Magnetventil 56 an der Druckleitung 40 zum Belüftungsventil 35 geöffnet, das einen Druckausgleich zwischen dem Druckbereich und dem Vakuumbereich herbeiführt. Dadurch entspannt sich die Druckdose 41, so daß die Membran 44 in ihre Ruhelage (Fig. 4) zurückkehrt. Damit wird die Lufteintrittsöffnung 34 schlagartig geöffnet und der Inhalt der Spülkammer entleert sich in einem Spülstoß.

Die in dieser Weise automatisierten Vorgänge können selbstverständlich auch von Hand gesteuert werden.

Die erfindungsgemäße Spüleinrichtung ist nicht an die vorstehend beschriebene, rechteckige, "klassische" Form eines Regenbeckens gebunden; sie kann infolge einfachster Bauwerksgeometrie vielmehr an alle möglichen Beckenformen und Kanalstauräume angepaßt werden.

## Patentansprüche

1. Spüleinrichtung zum selbsttätigen Spülen eines leergelaufenen Flüssigkeitsspeicherraumes (2), insbesondere eines Regenbeckens oder eines Kanalstauraumes, mit
- mindestens einer im Bereich des Sohlhochpunktes des Flüssigkeitsspeicherraumes (2) angeordneten Spülkammer (21) mit einer die Kammer luftdicht abschließenden Decke (33) sowie einer Spülöffnung,
- wobei die Spülöffnung aus einem syphonartigen Strömungskanal (24) mit einer der Spülkammer (21) zugewandten Eintrittsöffnung (26) und einer dem Speicherraum (2) zugewandten Austrittsöffnung (28) besteht und die Oberkante (30) der Eintrittsöffnung (26) unterhalb der Unterkante (29) der Austrittsöffnung (28) liegt und
- wobei die Spülkammer (21) eine Austrittsöffnung für die beim Füllen der Spülkammer zu verdrängende Luft mit einem Rückschlagventil und eine Lufteintrittsöffnung (34) mit einem Ventilsitz aufweist, die durch einen Ventilkörper (35) verschließbar und zur Auslösung eines Spülvorganges freigebbar ist,
dadurch gekennzeichnet,
daß der die Lufteintrittsöffnung (34) verschließende und freigebende Ventilkörper (35) aus einer Membran (44) aus elastisch verformbarem Material besteht;
daß die den Ventilkörper (35) bildende Membran (44) mit einem einseitig offenen Gehäuseteil (42) eine mit Druckluft beaufschlagbare Druckdose (41) bildet;
daß die Membran (44) durch erhöhten Luftdruck von der Innenseite der Spülkammer (21) heraus - die Lufteintrittsöffnung (34) verschließend - gegen den Ventilsitz (47) preßbar ist und
daß zwischen dem mit Druckluft beaufschlagbaren Innenraum der Druckdose (41) und dem Spülkammerraum (21) eine mit einem Steuerventil (56) versehene Druckausgleichsleitung (40) vorgesehen ist.

2. Spüleinrichtung nach Anspruch 1, dadurch gekennzeichnet, daß der Spüleinrichtung ein saugseitig an die Spülkammer (21) angeschlossenes Vakuumgebläse (36) zugeordnet ist.

3. Spüleinrichtung nach Anspruch 1 oder 2, dadurch gekennzeichnet, daß die Druckdose (41) durch das Vakuumgebläse (36) mit Druckluft beaufschlagbar ist.

## Claims

1. A flushing device for the automatic flushing of a drained liquid storage chamber (2), in particular a rain reservoir or a canal barrage chamber, having
- at least one flushing chamber (21), which is disposed in the vicinity of the bed high point of the liquid storage chamber (2), with a cover (33) sealing the chamber in an air-tight manner and a flushing orifice,
- wherein the flushing orifice comprises a syphon-like flow passage (24) with an inlet opening (26) facing the flushing chamber (21) and an outlet opening (28) facing the storage chamber (2), and the upper edge (30) of the inlet opening (26) is situated below the lower edge (29) of the outlet opening (28), and
- wherein the flushing chamber (21) has an outlet opening for the air to be displaced upon filling the flushing chamber, with a non-return valve and an air-inlet opening (34) with a valve seat, which can be closed by a valve body (35) and can be released to initiate a flushing operation,
characterised
in that the valve body (35) closing and releasing the air-inlet opening (34) comprises a diaphragm (44) of elastically deformable material;
in that the diaphragm (44) forming the valve body (35) forms with a housing part (42) open on one side a pressure cell (41) which can be acted upon by compressed air;
in that the diaphragm (44) can be pressed against the valve seat (47) by increased air pressure from the inside of the flushing chamber (21), thereby closing the air-inlet opening (34), and
in that between the inner chamber of the pressure cell (41), which can be acted upon with compressed air, and the flushing chamber (21) there is provided a pressure-equalising duct provided with a control valve (56).

2. A flushing device according to Claim 1, characterised in that a vacuum fan (36), which is connected to the intake side of the flushing chamber (21), is associated with the flushing device.

3. A flushing device according to Claim 1 or 2, characterised in that the pressure cell (41) can be acted upon with compressed air by the vacuum fan (36).

## Revendications

1. Dispositif de rinçage pour le rinçage automatique d'une chambre d'accumulation de liquide (2) qui a été vidée, notamment d'un bassin d'eaux fluviales ou d'un bassin de retenue de canal, avec
- au moins un compartiment de rinçage (21) disposé dans la région du point haut du lit de la chambre d'accumulation de liquide (2), avec un plafond (33) fermant le compartiment en étanchéité à l'air ainsi qu'avec une ouverture de rinçage,
- l'ouverture de rinçage étant constituée d'un canal d'écoulement du genre siphon (24), avec une ouverture d'entrée tournée vers le compartiment de rinçage (21) et une ouverture de sortie (28) tournée vers la chambre d'accumulation de liquide (2), et le bord supérieur (30) de l'ouverture d'entrée (26) se trouvant plus bas que le bord inférieur (29) de l'ouverture de sortie (28),
- et le compartiment de rinçage (21) présentant une ouverture de sortie, munie d'un clapet antiretour, pour l'air à refouler lors du remplissage du compartiment de rinçage, et une ouverture d'entrée d'air (34) pourvue d'un siège de soupape, qui peut être fermée par un corps de soupape (35) et ouverte pour déclencher une opération de rinçage,
caractérisé en ce que le corps de soupape (35) ouvrant et fermant l'ouverture d'entrée d'air (34) est constitué d'une membrane (44) en matériau élastiquement déformable, en ce que la membrane (44) constituant le corps de soupape (35) forme, avec une partie de boîtier (42) ouverte d'un côté, une boîte de pression (41) pouvant être alimentée en air comprimé, en ce que la membrane (44) peut, par une pression d'air accrue provenant de l'intérieur du compartiment de rinçage (21), être pressée contre le siège de soupape (47), fermant ainsi l'ouverture d'entrée d'air (34), et en ce qu'une conduite d'équilibrage de pression (40), pourvue d'une soupape de commande (56), est prévue entre l'intérieur, pouvant être alimenté en air comprimé, de la boîte de pression (41) et le compartiment de rinçage (21).

2. Dispositif de rinçage selon la revendication 1, caractérisé en ce qu'une soufflante à vide (36), raccordée du côté d'aspiration au compartiment de rinçage (21), est associée au dispositif de rinçage.

3. Dispositif de rinçage selon la revendication 1 ou 2, caractérisé en ce que la boîte de pression (41) peut être alimentée en air comprimé par la soufflante à vide (36).
